# DEMANDE DE BREVET EUROPEEN

(11) **EP 1 055 373 A1**
(43) Date de publication de la demande: **29.11.2000**
(21) Numéro de dépôt: 99201680.8
(22) Date de dépôt: 28.05.1999
(51) Int. Cl.: A23C 19/068, A23C 19/05

(54) **Fabrication d'un fromage de type à pâte filée**

(71) Demandeur: SOCIETE DES PRODUITS NESTLE S.A., 1800 Vevey (CH)
(72) Inventeur: Bisson, Jean-Pierre, 14000 Caen (FR); Parmantier, Claude, 14100 Glos (FR)
(74) Mandataire: Archambault, Jean

(57) **Abrégé**

Procédé de préparation d'un fromage de type à pâte filée, dans lequel on pasteurise du lait, on l'acidifie chimiquement à un pH de 5,2 à 5,7, on coagule le lait acidifié par addition de presure, de manière à obtenir un caillé, on découpe le caillé en morceaux, on le brasse en cuve, on sépare instantanément, en continu, le sérum du grain de caillé ainsi réalisé, de manière à obtenir une masse de fromage de type à pâte filée, on file et on forme ensuite cette masse de fromage de type à pâte filée en unités, on sale les unités à l'aide d'une saumure dont on règle le pH à une valeur de 4,9 à 5,3 par addition d'un acide organique et on emballe les unités dans un film plastique sous vide.

## Description

La présente invention a pour objet un procédé de préparation d'un fromage de type à pâte filée, notamment un fromage d'origine mexicaine dénommé "queso oaxaca".

Traditionnellement, il est connu de préparer le fromage de type à pâte filée à partir d'un lait cru que l'on fermente avec un starter naturel dont les souches bactériennes ne sont pas caractérisées. Par ajout de présure, ce lait cru fermenté est alors coagulé sous forme d'un caillé qui est découpé, brassé puis égoutté, de manière à en séparer le sérum. Le caillé est égoutté et acidifié en moule, en présence de bactéries thermophiles, pendant 2 à 6 h. Ce caillé est ensuite découpé en morceaux et trempé dans de l'eau à 90° C, pour être filé et ainsi obtenir un fromage dit à pâte filée.

La procédé traditionnel artisanal de préparation d'un fromage de type à pâte filée est long et présente des manipulations successives qui sont difficiles à gérer industriellement.

Dans le domaine de l'industrie fromagère, aucun procédé simple et rapide permettant de réaliser des fromages de type à pâte filée présentant le goût, la texture, l'onctuosité et la consistance régulière d'un fromage de type artisanal, par exemple d'origine mexicaine dénommé "queso oaxaca" n'est connu.

Par ailleurs, on observe des variabilités de la qualité, notamment au niveau de la texture, du goût et de la conservation des fromages de type à pâte filée, lors de la fabrication industrielle. Ces variabilités ont été identifiées comme étant liées à des problèmes de décalcification lors des étapes d'égouttage et d'acidification en moule.

Le but de la présente invention est de proposer un procédé simple, rapide et applicable industriellement permettant de palier à ces problèmes et permettant de réaliser des fromages de type à pâte filée ayant les mêmes caractéristiques que ces fromages réalisés artisanalement.

A cet effet, dans le procédé selon la présente invention, on pasteurise un lait, on l'acidifie chimiquement jusqu'à un pH de 5,2 à 5,7, on l'emprésurise de manière à former un caillé, on découpe le caillé en morceaux que l'on brasse en cuve, on sépare instantanément, en continu, le sérum du grain de caillé ainsi réalisé, de manière à obtenir une masse de fromage que l'on file, que l'on forme en unités, que l'on sale dans une saumure acidifiée à pH de 4,9 à 5,3 et que l'on emballe dans un film sous vide.

Contre toute attente, on a constaté que le procédé simple et rapide selon l'invention permet de réaliser un fromage de type queso oaxaca, bien que ne présentant pas une étape d'égouttage et d'acidification en moule de 2 à 6 h, normalement nécessaire pour la texturation dans le procédé traditionnel. La supression de l'étape d'égouttage et d'acidification classique, dans le procédé selon l'invention, permet un gain de temps et gain de coût considérables. Par ailleurs, on a constaté avec surprise que ce procédé permet de réaliser industriellement du fromage de type queso oaxaca présentant les qualités organoleptiques comparables à celles d'un fromage traditionnel.

Par lait, on entend désigner, un lait d'origine animale, tel que les laits de vache, de chèvre, de brebis, de bufflesse, de zébue, de jument, d'ânesse, de chamelle, etc. Ce lait peut être un lait à l'état natif, un lait reconstitué, un lait écrémé, ou un lait additionné de composés nécessaires aux qualités finales du fromage frais, comme par exemple des matières grasses, de l'extrait de levure, de la peptone ou un surfactant. On peut par exemple partir d'un lait cru entier que l'on standardise par addition de matière grasse lactique et de lait écrémé. On met en oeuvre de préférence un lait ayant 1,5 à 4 % en poids de matière grasse.

Ce lait doit être pasteurisé, c'est à dire doit avoir un subi un traitement de pasteurisation classique. Ces techniques sont bien connues de l'homme du métier.

On ajoute ensuite au lait pasteurisé et refroidi un acide de qualité alimentaire, par exemple lactique, acétique ou un mélange de tels acides sous forme d'une solution aqueuse en quantité suffisante, de manière à atteindre un pH de 5,2 à 5,7 et de préférence de 5,6 à 5,65, qui représente le pH de filature, que l'on maintient jusqu'à l'étape de filature-formage.

L'étape de filature consiste à chauffer la masse de fromage de type à pâte filée tout en la malaxant et à l'étirer mécaniquement.

L'étape de formage de la masse de fromage de type à pâte filée dans des volumes désirés, consiste à entraîner de cette masse plastique dans des formes. De préférence on forme des unités de 100 à 3000 g.

On peut traiter thermiquement jusqu'à 30-42° C le lait, de manière à atteindre la température optimale d'activité de la présure, lors de la coagulation.

On peut alors coaguler le lait, pendant 15-35 min, par ajout de 6-35 g de présure, de préférence d'origine microbienne, selon la force de la présure, pour 100 kg de lait aromatisé, de manière à obtenir un coagulum.

On découpe ensuite le coagulum en morceaux que l'on brasse en cuve, de manière à obtenir un grain de caillé dont la matière sèche, de 35-45%, est optimale pour l'étape de filature-formage.

On sépare alors instantanément, en continu, le sérum du grain de caillé, de manière à obtenir une masse de fromage de type queso oaxaca. On peut effectuer cette séparation sur tambour filtrant.

On file et on forme alors cette masse de fromage de type queso oaxaca en unités. De préférence, on forme des unités de 100 à 3000 g que l'on sale en saumure additionnée d'un acide organique de qualité alimentaire, par exemple d'acide lactique, acétique ou citrique ou d'un mélange de ces acides jusqu'à un pH de la saumure de 4,9 à 5,3.

On conditionne ensuite les unités dans un emballage hermétique essentiellement imperméable aux gaz en matière plastique souple ou en complexe, notamment thermorétractable, par exemple une pellicule de PVC, PVDC, polystyrène, polyamide ou polypropylène sous vide.

De préférence, on maintient la température à 26-42° C depuis l'étape de brassage jusqu'à l'étape de filature-formage.

La présente invention a également pour objet le fromage de type queso oaxaca obtenu par la mise en oeuvre du procédé. Ce fromage de type queso oaxaca présente une bonne texture typique et un goût authentique comparables à ceux d'un fromage réalisé traditionnellement.

Le procédé de préparation d'un fromage de type queso oaxaca selon l'invention est décrit plus en détails à l'aide de l'exemple ci-après. Les pourcentages sont donnés en poids, sauf indication contraire.

### Exemple

On prépare un fromage de type queso oaxaca à partir d'un lait cru de vache, enrichi en lait écrémé et standardisé à 3 % de matière grasse par addition de matière grasse lactique, que l'on pasteurise à 72° C/15 s et que l'on refroidit à 8° C. On y ajoute une solution contenant 3 % d'acide lactique à 50 %, 3% d'acide acétique à 50 % et 94 % d'eau, à raison de 4 % par rapport au lait, ce qui produit une acidification à un pH de 5,6 à 5,65.

On traite thermiquement le lait ainsi obtenu, de manière à maintenir sa température à 32° C pour l'étape de coagulation.

On le coagule pendant environ 28 min. par addition de 6 g de présure microbienne au 1/15 000 ème, pour 100 1 de lait, de manière à obtenir un coagulum que l'on découpe en morceau et que l'on brasse en cuve et que l'on réchauffe à 38° C. On réalise ainsi un grain de caillé.

On sépare, en continu, le sérum du grain de caillé sur tambour filtrant, de manière à obtenir une masse de fromage. Depuis l'étape de brassage jusqu'à l'étape de filature-formage, on maintient la température du milieu à 38° C.

On file alors la masse à 60-64° C (température de la masse de fromage) dans de l'eau chaude à 85° C et on la forme en unités de 3000 g dans des moules.

On sale les unités dans une saumure additionnée d'acide lactique jusqu'à un pH de 4,9 à 5,3.

On conditionne alors ces fromages de type queso oaxaca de 3000 g dans des emballages en film de type cryovac (R) sous vide, thermorétractés par chauffage à l'air chaud ou dans l'eau chaude. Ces fromages de type queso oaxaca ont un goût authentique et la texture typique.

## Revendications

1. Procédé de préparation d'un fromage de type à pâte filée, dans lequel:
- on pasteurise un lait,
- on l'acidifie chimiquement jusqu'à un pH de 5,2 à 5,7,
- on l'emprésurise de manière à former un caillé,
- on découpe le caillé en morceaux que l'on brasse en cuve,
- on sépare instantanément, en continu, le sérum du grain de caillé ainsi réalisé, de manière à obtenir une masse de fromage que l'on file, que l'on forme en unités,
- on sale les unités formées dans une saumure acidifiée à pH de 4,9 à 5,3 et
- on les emballe dans un film sous vide.

2. Procédé selon la revendication 1, dans lequel le pH après acidification, qui est également le pH de filature, est 5,6 à 5,65.

3. Procédé selon la revendication 1, dans lequel l'acidification a lieu au moyen d'un acide organique choisi parmi les acides lactique, acétique et citrique et leurs mélanges.

4. Procédé selon la revendication 1, dans lequel le lait a une teneur en matière grasse de 1,5 à 4 %.

5. Procédé selon la revendication 1, dans lequel on traite thermiquement le lait jusqu'à 30 à 42° C avant de le coaguler.

6. Procédé selon la revendication 1, dans lequel on coagule le lait pendant 15-35 min. par la présure.

7. Procédé selon la revendication 1, dans lequel on maintient la température à 26-42° C depuis l'étape de brassage jusqu'à l'étape de filature-formage.

8. Procédé selon la revendication 1, dans lequel on acidifie la saumure de salage jusqu'à un pH de 4,9 à 5,3 au moyen d'un acide organique choisi parmi les acides lactique, acétique et citrique et leur mélanges.

9. Fromage de type à pâte filée obtenu par la mise en oeuvre du procédé selon l'une des revendicationa 1 à 8.
